# EUROPÄISCHE PATENTSCHRIFT

(11) **EP 0 456 918 B1**
(45) Veröffentlichungstag und Bekanntmachung des Hinweises auf die Patenterteilung: **17.05.1995**
(21) Anmeldenummer: 90250312.7
(22) Anmeldetag: 14.12.1990
(51) Int. Cl.: B09B 1/00, B09B 3/00

(54) **Verfahren zur Komplexdeponie von Schadstoffen mit wasserlöslichen Anteilen**
Method of dumping pollutants containing water-soluble constituents
Procédé pour la mise à la décharge de matériaux polluants contenant des substances solubles dans l'eau

(30) Priorität: 11.05.1990 DD 340553
(43) Veröffentlichungstag der Anmeldung: 21.11.1991
(73) Patentinhaber: ZINKE-OEKO ENGINEERING, D-03044 Cottbus (DE)
(72) Erfinder: Zinke, Bernhard, O-7512 Cottbus (DE); Wagner, Harald, O-7500 Cottbus (DE); Roesler, Jörg, O-7500 Cottbus (DE); Heidrich, Wolfgang, O-7560 Wilhelm-Pieck-Stadt Guben (DE); Stolz, Hans-Joachim, O-7560 Wilhelm-Pieck-Stadt Guben (DE)
(74) Vertreter: Zeitler & Dickel

(56) Entgegenhaltungen:
- WO-A-88/02739
- AT-B- 385 215
- DD-A- 201 649
- DD-A- 234 374
- DE-A- 3 031 525
- DE-A- 3 513 953

## Beschreibung

Die Erfindung betrifft ein Verfahren zur Komplexdeponie von Schadstoffen mit wasserlöslichen Anteilen nach dem Oberbegriff des Anspruchs 1.

Schadstoffe mit hohem Wasserschadstoffanteil werden in unterschiedlichster Form inertisiert bzw. gelagert, um zu verhindern, daß unzulässig hohe Schadstoffmengen gesundheitsschädigende Auswirkungen durch Wasserlösungsreaktionen bewirken. So ist die Langzeitzwischenlagerung in geschlossenen Gebäuden bekannt. Ebenso ist die Lagerung in Fässern und in Folie sowie in momentan dichten Restlöchern bekannt. All diese Lösungen birgen eine Langzeitgefahr in sich, da eine Zerstörung des augenblicklichen Schutzes als nicht ausschließbare Gefahr eine Radikalverseuchung bewirken kann, welche durch "Selbstentgiftungskräfte" der Natur nicht mehr korrigierbar ist und einen dauerhaften Schaden verursachen könnte.
Sicherer hingegen sind die bekannten Verfahren der Schadstoffeinbindung durch Zementierung. Oftmals aber reichen diese Verfahren durch unzureichenden Einbindungsgrad (zu hohe zeitliche Schadstoffabgabe) allein nicht aus oder die Bindemittel-Schadstoffreaktionen bewirken eine unzureichende Langzeitstabilität unter Beachtung der einwirkbaren Witterungseinflüsse. Der hohe Anteil teurer Bindemittel (Zement usw.) macht derartige Umwelttechnologien oftmals zu einer kostenaufwendigen Angelegenheit, wobei eine erforderliche langfristige offene Deponiehaltung zusätzliche Kosten verursacht.
Bekannt ist ein Verfahren zur Herstellung eines wasserundurchlässigen Behälters für Deponien, wobei in eine vorbereitete Geländeformation eine wasserundurchlässige Schicht eingebracht wird, die unter Verwendung von Flugasche hergestellt wird (DD-PS 234 374).

Der Aufschluß der Flugasche erfolgt mit einem Wasserüberschuß, wobei eine alkalische Anregung erforderlich ist.
Diese Deponiebehälter weisen infolge der geringen alkalischen Anregung keine Frostbeständigkeit auf und sind infolge ihrer Sprödizität (geringes Arbeitsvermögen von schwindfrei abgebundenen alkalisch angeregten wassergesättigten Flugaschen) nicht bruch- und setzungssicher, wodurch Gefahren bei ungleichmäßiger und unzureichender Deponieuntergrundverdichtung und/oder durch ungleichmäßige Belastung bzw. Beschickung des Behälters mit Schadstoffen trotz hoher Behälterwandungsstärke (hohe Kosten !) langfristig nicht ausschließbar sind.
Weiterhin bekannt ist ein Verfahren zum schadlosen Deponieran von Abfallstoffen, wobei feste, gelöste oder suspendierte Abfallstoffe mit Wasser zu einer homogenen, breiartigan Konsistenz vermischt werden und zu einer wasserundurchlässigen Masse erhärten (DD-PS 201 649). Möglich ist das Einbringen von Schadstoffen, z. B. Dünnsäuren bei gleichzeitigar Abdichtungsfunktion der flugascheverfestigten Schicht gegen Sickerwasser.
Die in DD-PS 234 374 vorhandenen Mängel hinsichtlich langfristiger Behältersicherheit und/oder Bruchsicherheit der verfestigten Schadstoffe gelten auch für dieses Verfahren.
Hinzu kommt, daß bei fehlender "neutraler Umhüllung" der befestigten schadstoffeingebundenen Körper bzw. Schichten ein Austreten von Schadstoffen bei Feuchtigkeit und/oder Regen durch Kapillarwirkung (allmähliche Auswaschung) generell nicht verhinderbar ist, obwohl nur ein geringer Durchströmungswert zu verzeichnen ist. Hinzu kommt, daß dieses Verfahren nur bei ausreichendem Reaktionswasser des zu verfestigenden Schadstoffes infolge der chemisch-physikalischen Schadstoffverfestigung (Einbindung) wirkungsvoll ist.
Bekannt ist ein verfahren zur Entsorgung von schadstoffbeladenen Stoffen und Verwendung des dabei hergestellten Produktes, wobei durch die Zugabe einer zumindest latent hydraulischen Asche unter Einstellung eines zur vollständigen Hydratation ausreichenden Wasser/Feststoff-Verhältnisses eine Inertisierung der Schadstoffe mit Schutz gegen Auslaugung und Auswaschung erfolgt (DE-OS 3634650).
Die eingebetteten Schadstoffe werden zu festen deponiefähigen Körpern geformt und gelagert. Dies ist aber nur bei Mindestwassergehalten von 25 ... 35 Gewichtsprozent, bezogen auf die Gesamtmischung, möglich, um eine vollständige Hydratation abzusichern. Trotz geringer Wasserdurchlässigkeit würden bei Zerfall, Zerstörung, Zarfrierung, Absandung usw. der deponiefähigen Körper eine Auslaugung und eine Oberflächenschadstoffauskristallisation durch Kapillarwirkung zu verzeichnen sein, wodurch wiederum ein Schadstoffdurchsickern in wasserführende Schichten nicht auszuschließen ist.
Für diesen Anwendungsfall ist eine gefahrlose Deponie von flüssigen und/oder pastösen Schadstoffen, die bei der Ascheeinbindung nicht mit dem für die Abbindung erforderlichen Anmachwasser versehen werden können (keine Vermischbarkeit mit Wasser, wie z. B. bei Textilreinigungsrückständen), nicht möglich.

Ziel dar Erfindung ist es, eine Schadstoffauslaugung verhindernde langzeitstabile und kostengünstige Deponie für feste, flüssige und pastöse Schadstoffe zu schaffen.

Der Erfindung liegt die Aufgabe zugrunde, eine Möglichkeit zur Deponie von Schadetoffen zu gewährleisten, die einen Mehrfachschutz aufweist, bei der Schadstellen konkret lokalisierbar und beseitigbar sind.

Dies wird erfindungsgemäß dadurch erreicht, daß bei einem Verfahren der eingangs genannten Art parallel zur Blockfertigung nach einer Schadstoffuntersuchung und Kategorisierung der Deponieraum derart hergestellt wird, daß dessen Wände durch einen Erdaushub und mit nachfolgendem Verfüllen mit einer gebrochene Zuschlagstoffe und/oder eine Textilbewehrung aufweisenden Flugasche- bzw. Flugasche-Zement-Suspension gebildet und dessen Boden nach dem inneren Aushub mit einer mit Textilbewehrung versehenen Schicht aus Flugasche- bzw. Flugasche-Zement-Suspension ausgeschlämmt wird, wonach der mit Blöcken gefüllte Deponieraum mittels Flugasche- bzw. Flugasche-Zement-Suspension allseitig verfüllt und unter Einbeziehung von Textilbewehrung verschlossen wird.

Die Erfindung gewährleistet das Eintreten von schwindfreien Verfestigungsreaktionen von verspannten entwässerungskonform verdichteten aktiven Flugaschen in Suspensionsform für Deponiekörper, welche nach Aushärtung Wasserdurchlässigkeiten von < 10 - 9 m/s ermöglichen, wenn das Verdichtungsverhalten eine Feststofflagerungsdichte von > 1.3 kg/dm³ der entwässserungskonform verdichteten Suspension garantiert, wobei Dichtigkeiten und Festigkeiten derartiger Gemische durch Einmischung von Zement (100 - 300 kg/m³ verdichtetes Gemisch) entsprechend den jeweiligen Anforderungen erhöhbar sind (Wasserdurchlässigkeiten von < 10 - 12 und Festigkeiten von > 50 N/mm² erzielbar). Der Erhärtungsmechanismus derartiger Flugasche-bzw. Flugasche-Zement-Gemische entfaltet sich optimal unter Verspannungsbedingungen, welche durch Flugasche-Zement-Gemisch verfüllte Schlitzwände als senkrechte seitliche Deponiebegrenzungen (innerer Deponieraumaushub nach deutlicher Schlitzwandverfestigung) und/oder Einmischung bzw. Ausschlämmung von gebrochenen Zuschlagstoffen (Splitt, Schotter) und/oder Textilbewehrung (Netze mit Verankerung, eingemischte rißfeste beständige Textilfasern) realisiert werden kann. Der Deponiekörperboden ist unter Beachtung der Deponiebevorratungsgröße derart tief vorzusehen, daß eine allmähliche Durchfeuchtung und/oder Auslaugung von eingelagerten Schadet offen durch hohe Grund- bzw. Schichtenwasserstände ausgeschlossen werden kann (Standortfrage) und eine mindestens 1 %ige Neigung in Richtung der Fließrichtung des darunter befindlichen Grund- bzw. Schichtenwassers zu verzeichnen ist. Durch Größe, Schichtstärke, Gemischberücksichtigung sowie Untergrundwahl (Standortfrage) ist eine Rißbildung auszuschließen, weshalb bevorzugt textilbewehrte Flugasche-Zement-Gemische mit geringem E-Modul ( < 4000 kp/cm²), bei hohen Deformationsfestigkeiten ( > 20 MPa), begrenzter Sohlflächenausdehnung (< 20 000 m²) und Mindestsohlstärken von 4 cm zur Anwendung gelangen sollten.

Um plastisches "Gemischabreißen" und Setzungen bei geringen Standsicherheiten bzw. Tragfähigkeit des Untergrunds zu vermeiden, sollten bevorzugt senkrechte Böschungswände als Schlitzwände, welche als erster technologischer Schritt der Deponiekörperrichtung auszufuhren sind, berücksichtigt werden. Bei Schlitzbreiten von > 40 cm reicht dabei als Gemisch eine aktive Flugaschesuspension aus, welche o. g. Bedingungen bei > 5 N/mm² Endfestigkeit ermöglicht, wenn die Schlitztiefe 3 m nicht übersteigt.
Ansonsten ist die Gemischqualität für die Schlitzfüllung hinsichtlich Standsicherheit durch Festigkeitserhöhung (Zementeinmischung in Suspension) und/oder zusätzliche Bewehrung (z. B. Textilschnitzeleinmischung von 30 ... 60 kg/m² - verdichtetes Gemisch) zu verbessern, um höchste Sicherheiten zu garantieren. Die Gemischausfüllung der Schlitzwand hat so zu erfolgen, daß die Tiefe mindestens 20 cm tiefer ist als die projektierte Sohltiefe des Deponiekörpers, wobei der obere Gemischabschluß der Schlitzwand parallel zur projektierten Sohle mit Gefälle versehen sein muß und eine Mindesttiefe zum umgebenden Gelände von 50 cm aufweisen muß.
Nach Standfestigkeit der so ausgefüllten Schlitzwand erfolgt der innere Erdaushub unter Beachtung des Gefälles für o. g. Deponiekörpersohle, welche mit o. g. Gemisch an die senkrechte gesäuberte Böschungsschlitzwand angeschlossen hergestellt wird.

Die Herstellung der Blöcke erfolgt nach verschiedenen Varianten:
1. In feste Blöcke (technologische Mindestfestigkeit: 2 MPa) gießbare bzw. schneidbare Schadstoffe, welche,mit einem dichtenden Anstrichsystem (z. B. Kaltanstrich) versehen, keine Lösungsprodukte in das die Blöcke in den Deponieraum dicht und allseits vermörtelnde Gemisch (aktive Flugaschesuspension mit Mindestwasseranspruch, in welcher Kiessand bzw. Sand in Größenordnungen eingemischt wird, um eine gute steife Vermörtelungskonsistenz zu erreichen) eindringen lassen, werden in sicheren Gebäuden zwischengelagert, bis Füllen des Deponiekörpers durch o. g. Blockvermörtelung vollständig oder zu einem akzeptablen Teilabschluß (senkrechte Vermörtelungswand) bei oberer Abdeckung durch Dichtungsschicht analog Sohle und darüber aufgeschüttetem pflanzenwirksamen Erdstoff möglich ist, wobei die Blockgröße den vorhandenen technologischen Möglichkeiten (Hebezeuge, Lagerraumgröße usw.) anzupassen ist. Der geschlossene Deponieraum kann dabei bei einem Blockfüllvorgang erreicht werden (Vorzugslösung) oder durch allmähliches "Zuwachsen" (Abdeckung wird bei jedem Blockdeponievorgang größer).
   Die Anstrichsysteme müssen nur kurzzeitig wirksam werden, um einen Austausch von Lösungsprodukten in das frische feuchte Vermörtelungsgemisch zu verhindern. Nach Mörtelaustrocknung und geschlossenem Deponieraum ist durch Wasserundurchlässigkeit des Mörtels und der noch dichteren oberen Dichtungsschicht eine Schadstoffauslaugung durch anströmendes oberes Wasser (Regen usw.) ohnehin nicht mehr möglich. Verhindern die Lösungsprodukte der festen Schadstoffe die Schutzfunktion des Anstrichsystems, so kann diese vorübergehende Schutzfunktion auch durch Olpapier-, Dachpappe- oder Folienumhüllung oder ähnliches erfolgen.
2. Als Brocken mit nicht einheitlicher Korngröße anfallende feste Schadstoffe sind in steifes Flugasche-Zement-Gemisch (z. B. Vermörtelungsgemisch mit geringer Zementanregung) analog einem herkömmlichen Zuschlagstoff einzumischen, so daß höchstens je m³ entstehendem, zum Block verdichtetem Frischgemisch 90 % des Schüttdichtevolumens aus lose geschütteten Schadstoffbrocken bestehen (vollständige Schadstoffeinbettung und Schadstoffumhüllung).
   Nach Verfestigung und Antrocknung werden diese Blöcke wie feste Blöcke nach Punkt 1 gehandhabt.
3. Flüssige und pastöse Schadstoffe mit Wasseranteilen, die groß genug sind, um eine chemische Wassereinbindung für Hydratphasenbildung aktiver Flugaschen (ca. 10 % Wasser bezogen auf Flugaschegewicht) zu ermöglichen, werden so lange unter langsamer Einmischung von Flugasche in den Flüssigschadstoff zu Gemischen inertisiert, bis ausreichende Gemischsteifheit vorhanden ist, wobei keine nennenswerte Luftporosität ( < 1 %) im nunmehr steifen Gemisch zu verzeichnen sein darf. Zur Steuerung der Festigkeit kann am Schluß eine geringfügige Zementeinmischung erfolgen.
   Nach mehr als 20tägiger Erhärtungszeit werden die verfestigten und ausgetrockneten Blöcke wie feste Blöcke nach Punkt 1 gehandhabt.
4. Flüssige und pastöse Schadstoffe mit unzureichenden Wasseranteilen entsprechend Punkt 3 erhalten nachträglich eine für die Bindemittelmenge (Hydratphasenbildung) erforderliche Wassermenge eingemischt und werden ansonsten wie in Punkt 3 beschrieben behandelt.
5. Völlig wasserlösliche Feststoffe (z. B. Pulver) können als wassergesättigte Lösung wie ein Flüssigschadstoff nach Punkt 3 gehandhabt werden.

Vor dem geschlossenen Deponieraum wird in Fließrichtung des Grund- bzw. Schichtenwassers eine ständig zu überwachende Kontrollbohrung (zum Vergleich wurde der Anfangswert vor Deponiebelegung aufgenommen) vorgenommen, Mit Schlitzwand als Böschung versehene Deponieräume können sich aneinanderreihen, wobei eine gute Komplexüberwachung möglich ist.

Sollte aus unvorhersehbaren Gründen oder infolge technologischer- bzw. Gemischfehler an einer Kontrollstelle ein Überschreiten eines höchstzulässigen Meßwert es zu verzeichnen sein, so kann zusätzlich durch eine separate, das Grund- bzw. Schichtenwasser abriegelnde Schlitzwand, welche nach Hineinpumpung von flüssigen Flugasche-Zement-Gemischen bei gleichzeitiger kontinuierlicher Wasserabsaugung nach eingetretener Verfestigung und Verdichtung ein Weiterdringen des schadstoffbeladenen Wassers und somit eine Breitenverteilung verhindert, wodurch ein größerer Umweltschaden vermieden werden kann und der Schadstoffherd eingrenzbar ist, eine Verseuchung ausgeschlossen werden. Die realisierte Deponie stellt ein verfestigtes Kammersystem aus einem nicht schadstoffbelasteten, allseits wirksamen Stützgerüst dar, welches vollständig umhüllt ist. Darin befinden sich bei voller Anpressung an die Kammerwandungen der zu Blöcken dauerhaft eingebundene und verfestigte Schadstoff. Dieses Kammersystem gewährleistet eine erhöhte Langzeitsicherheit der Deponie.

Anhand eines Ausführungsbeispiels soll nachfolgend die Erfindung näher erläutert werden. Dabei zeigt:
Fig. 1 die Prinzipskizze einer Schadstoffdeponie
Fig. 2 die Deponie im Querschnitt

Bevor eine sichere Entsorgung der anfallenden Schadstoffe erfolgen kann, muß eine Einstufung der Schadstoffe in Gefährdungskategorien erfolgen, die wie folgt gebildet werden und die Art der Entsorgung beeinflussen:
a) unproblematischer Schadstoff
   - Schadstoff enthält genügend Wasser für Erhärtungsreaktionen und ist dünn genug (geringe Viskosität), um ohne Zusatzwasser mit Flugasche bei einem Schadstoffanmachgehalt von ≧ 0,5 (Schadstoffmasse/Flugaschemasse) vermischt, gepumpt und entflüssigungskonform (z. B.: überschüssige Schadstoffabsaugung bei Vakuumverdichtung) verdichtet zu werden, um als Formblock bzw. Formkörper auf jeweiliger zwischengedichteten Deponieebene gefertigt bzw. abgestellt zu werden.
   - Körper/Block mit hoher Frischgemischfestigkeit weist normales Flugasche-Zement-Gemischverhalten auf.
   - Erhärteter Körper/Block ist wasser-, schadstoff- und raumbeständig.
   - Erhärteter Körper besitzt bei Verwendung geeigneter Flugasche extrem geringe Wasserdurchlässigkeit (im allgemeinen: <10 ⁻⁹ m/s).
   - Je m³ Schadstoff werden ca. 3 t Flugasche benötigt (Mittelwert).
   - 1 m³ bewirkt Körper/Block-Volumen von ca. 2,2 m³ (Mittelwert).
   - Schadstoffbeispiel: Autowaschanlagenrückstand.
b) schwach problematischer Schadstoff
   - Schadstoff mit genügend vorhandenem Wasser für Erhärtungsreaktionen wird mit 10 - 40 % Zusatzwasser versehen, um anschließend, wie in Kategorie a) beschrieben, verarbeitet zu werden und die gleichen Effekte zu erbringen.
   - Je m³ Schadstoff werden ca. 4 t Flugasche benötigt (Mittelwert).
   - Schadstoffbeispiel: Neutraschlamm
c) mittelproblematischer Schadstoff
   - Schadstoff enthält genügend Flugasche-Zement-Reaktionswasser.
   - Schadstoff-Flugaschegemisch ist nicht vakuummierbar (Flüssigkeitsabzug), weshalb stets mittels Intensivzwangsvermischung (von dünn zu dick allmählich mischen) ein steifes homogenes Gemisch herzustellen ist und mittels Intensivverdichtung als Körper/Block abgestellt wird.
   - Nach Normalerhärtung Effekte wie in Kategorie a).
   - Je m³ Schadstoff werden 2 - 3 t Flugasche benötigt.
   - 1 m³ bewirkt Körper/Block-Volumen von ca. 2 m³ (Mittelwert).
   - Schadstoffbeispiel: Ölabscheiderrückstände
d) problematischer Schadstoff
   - Schadstoff wie in Kategorie a) ... c) mit Erhärtung, die jedoch nicht zu dauerstabilen Körper/Block-Produkten, aber mit Flugasche-Suspension partiell umhüllbaren Produkten führt (Schutzhülle), ohne daß die Körper/Blöcke während der Schutzumhüllungsherstellung und -erhärtung zerfallen.
   - Je m³ Schadstoff werden ca. 3,2 t Flugasche benötigt (Mittelwert).
   - 1 m³ bewirkt Körper/Block-Volumen von ca. 2,3 m³ (Mittelwert).
   - Schadstoffbeispiel: sulfidische Lösungsprodukte
e) stark problematischer Schadstoff
   - Schadstoff ist nicht mit Wasser verdünnbar und enthält auch nicht genügend Anmachwasser für eigene Erhärtungsreaktionen.
   - Schadstoff läßt sich nach Intensivvermischung und -verdichtung wie Kategorie c) zu Körper/Blöcken hoher Frischgemischfestigkeit verfestigen, wobei jedoch keine eigene Erhärtung stattfindet, aber eine Umhüllung analog Kategorie d) durchführbar ist.
   - Je m³ Schadstoff werden ca. 2 - 3 t Flugasche benötigt (Mittelwert).
   - 1 m³ bewirkt Körper/Block-Volumen von ca. 2,0 m³ (Mittelwert).
   - Schadstoffbeispiel: Textilreinigungsrückstand
f)
   - Schadstoff ist durch Umhüllung mit Flugasche-Zement-Gemisch nicht vollständig gegen Auslaugung gesichert.
   - Schadstoff wird mit Flugasche vermischt, steift an, wird mit einer Flugasche-Zement-Schutzhülle analog Kategorie a) ... e) versehen und anschließend in Schutzumhüllung (z. B. Foliensäcke) abgelagert.
   - Je m³ Schadstoff werden ca. 2 - 3 t Flugasche benötigt (Mittelwert).
   - 1 m³ bewirkt ein Körper/Block-Volumen von ca. 2,5 m³ (Mittelwert).

In einem chemischen Großbetrieb fallen jährlich im werkseigenen Heizhaus 40 000 t aktive Flugaschen an, deren Feststofflagerungsdichte nach maximaler entwässerungskonformer Verdichtung der entsprechenden Flugasche-Wasserreaktion 1,35 kg/l beträgt, wobei nach Verspannungsfeuchtraumlagerung Endfestigkeiten von ca. 8 MPa erzielbar sind. Diese Flugaschen sind ohnehin zu deponieren und benötigen als erdfeuchtes Deponiegut (Anfeuchtung und Mischung) einen Deponieraum von ca. 35 000 m².
Ferner fallen in o. g. Großbetrieb jährlich ca. 5 000 in jeweils einem m³ gießbare feste Schadstoffblöcke an.
Die vergossenen Schadstoffblöcke weisen eine Eigenfestigkeit von ca. 6 N/mmB auf. Weitere Flüssig schadstoffe in Größenordnungen 7 000 000 l/a müssen ebenfalls einer Inertisierung zugeführt werden, weil eine weitere Verfüllung in angenommen dichte Restlöcher nicht mehr möglich ist und eine freie Deponie ebenfalls zu o. g. Auswirkungen führen würde. Außerdem fallen pulverförmige Schadstoffe in einer Größenordnung von 2 000 t/a an, die mit 3 200 m³ sonstigen verunreinigten Wässern gelöst als zusätzliche 5 200 t/a Flüssigschadstoff betrachtet und deponiert werden können, wobei ein BSB-Wert von bis zu 4 000 mg 02/l zu verzeichnen ist. Für die Inertisierung der 7 000 000 l/a Flüssigschadstoffe wird eine Flugaschemenge von 21 000 t benötigt, woraus sich ca. 14 000 Blöcke a 1 m³ fertigen, stapeln und nach Aushärtung und Austrocknung mit Kaltanstrich vorübergehend schützen lassen. Für die Inertisierung des pulverförmigen Lösungsproduktes werden 12 000 t/a Flugasche benötigt, wobei ca. 7 000 Blöcke a 1 m³ zu fertigen, stapeln und nach Aushärtung und Austrocknung vorübergehend mit Kaltanstrich zu schützen sind.

Somit würden in diesem chemischen Großbetrieb jährlich 26 000 Blöcke a 1 m³ inertisiert zu deponieren sein, wobei 156 000 m³ glatte Flächen mit Kaltanstrich zu versehen sind und bereits für die Inertisierung eine Flugaschemenge von 33 000 t/a verbraucht wird.
Die noch verbleibenden 7 000 t/a Flugasche werden für Schlitzwand, Sohle, Vermörtelungsgemisch und obere Dichtungsabdeckung benötigt, wobei unter Berücksichtigung eines Gesamtzementbedarfs von ca. 1 000 t und eines Textilfaserbedarfes von ca. 10 t (aus eigenen Resten für Gemischbewehrung genutzt) ca. 5 000 m³ Flugasche-Zement-Gemische für die Deponiekörperumhüllung der 26 000 m³ Schadstoffe (Gesamtdeponiekörper ca. 31 000 m³) bereitgestellt werden. Daraus ergibt sich eine jährliche Errichtung und Schließung eines ca. 31 000 m³ großen Deponieraumes mit einem Flächenbedarf von ca. 15 000 m² bei einer Deponietiefe von 2,5 ... 3 m (unter Beachtung der Neigung bei nachgewiesener Grundwassersicherheit) und einer pflanzenwirksamen Mindesterdstoffüberdeckung von 50 cm, wobei die allseitig geschlossenen Deponieflächen landschaftlich gestaltet nutzbar sind und durch Kontrollbohrungen in Grundwasserfließrichtung vor Deponieraum überwachbar sind.

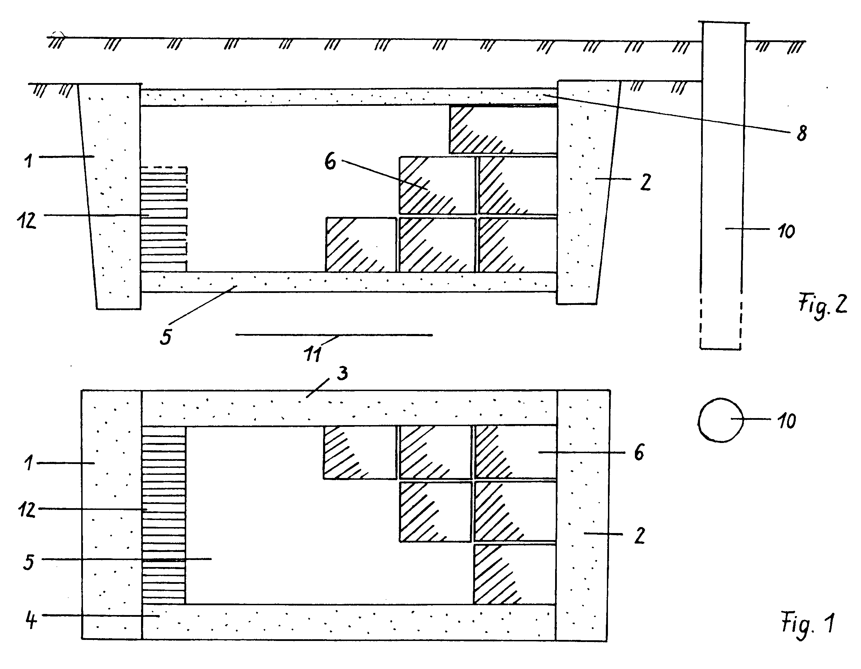

Die zu errichtende Schadstoffdeponie weist Wände 1 - 4, die Bodenschicht 5, die inertisierten Blöcke 6, die Umhüllung 7, die Verschlußschicht 8, die Erdabdeckung 9 und die Kontrollbohrung 10 auf (Fig. 1 und 2). Die Bodenschicht 5 und die Verschlußschicht 8 sind in einem Gefälle zur Grundwasserfließrichtung 11 ausgeführt. Bei nicht genügender Standfestigkeit der noch nicht durch inertisierte Blöcke 6 abgestützten Wände, wird eine zusätzliche Versteifung 12 angeordnet.

Eine Erhöhung des biologischen Sauerstoffbedarfs ist nicht zu verzeichnen.
Ohne dauerhafte und nachteilige landschaftliche Schäden ergibt sich für den Betrieb mit dem jährlichen Abproduktenanfall von
ca. 40 000 t Flugasche
ca. 5 000 m³ feste vergossene Schadstoffe
ca. 7 000 m³ Flüssigschadstoffe
ca. 2 000 t Pulverschadstoffe
ein geschlossener Stoffkreislauf, wobei jährlich kontrollierbar ein Deponieraum von 31 000 m³ erschlossen, geschlossen und landschaftlich auf 15 000 m² gestaltet werden kann und wobei "Umweltkatastrophen" ausschließbar sind und das beanspruchte Deponievolumen nicht den ohnehin für die Flugaschedeponie erforderlichen Deponieraum übersteigt.

Die Kosten der aufgezeigten Komplexdeponie liegen deutlich unter den Kosten von unvollständig wirksamen biologischen Reinigungsverfahren, wobei Abwassergelder und/oder Strafgelder entfallen und negative Langzeitwirkungen mit Radikalverseuchungen ausschließbar sind.

Die realisierte Deponie stellt ein verfestigtes Kammersystem aus einem nicht schadstoffbelasteten, allseits wirksamen Stützgerüst dar, welches vollständig umhüllt ist. Darin befinden sich bei voller Anpressung an die Kammerwandung der zu Blöcken dauerhaft eingebundene und verfestigte Schadstoff. Dieses Kammersystem gewährleistet eine erhöhte Langzeitsicherheit der Deponie.

## Patentansprüche

1. Verfahren zur Komplexdeponie von Schadstoffen mit wasserlöslichen Anteilen, wobei die Schadstoffe durch eine Einbindung in mit Wasser gesättigter Flugasche inertisiert, unter möglicher Zugabe von Zement als alkalischer Anreger zu Blöcken geformt und in einem Deponieraum gelagert werden,
**gekennzeichnet dadurch**,
daß parallel zur Blockfertigung nach einer Schadstoffuntersuchung und Kategorisierung der Deponieraum derart hergestellt wird, daß dessen Wände (1 - 4) durch einen Erdaushub und mit nachfolgendem Verfüllen mit einer gebrochene Zuschlagstoffe und/oder eine Textilbewehrung aufweisenden Flugasche- bzw. Flugasche-Zement-Suspension gebildet und dessen Boden (5) nach dem inneren Aushub mit einer mit Textilbewehrung versehenen Schicht (5) aus Flugasche- bzw. Flugasche-Zement-Suspension ausgeschlämmt wird, wonach der mit Blöcken (6) gefüllte Deponieraum mittels Flugasche- bzw. Flugasche-Zement-Suspension allseitig verfüllt und unter Einbeziehung von Textilbewehrung verschlossen wird.

2. Verfahren nach Anspruch 1, gekennzeichnet dadurch, daß der Boden und die Verschlußschicht (8) des Deponieraumes mit einem Gefälle in Fließrichtung des Grund- bzw. Schichtwassers (11) ausgeführt werden.

3. Verfahren nach Anspruch 1 und 2, gekennzeichnet dadurch, daß in Fließrichtung des Grund- bzw. Schichtwassers (11) eine ständig zu überwachende Kontrollbohrung (10) eingebracht wird.

4. Verfahren nach Anspruch 1, gekennzeichnet dadurch, daß anstelle normalen Anmachwassers für die Suspension Flüssigschadstoffe verwendet werden.

5. Verfahren nach Anspruch 1, gekennzeichnet dadurch, daß als Oberflächenschutz für die Blöcke (6) ein Schutzanstrich und/oder eine Ölpapier-, Dachpappe- oder Folienumhüllung eingesetzt wird.

6. Verfahren nach Anspruch 1, gekennzeichnet dadurch, daß zwischen den einzelnen Blockschichten (6) im Deponieraum eine Schicht entwässerbaren Materials eingebracht wird.

7. Verfahren nach Anspruch 6, gekennzeichnet dadurch, daß als entwässerbares Material Flugasche, Zement oder Textilbewehrung eingesetzt wird.

8. Verfahren nach Anspruch 1 bis 7, gekennzeichnet dadurch, daß die geschlossene Deponie mit einer Erdabdeckung (9) versehen wird.

9. Verfahren nach Anspruch 1 bis 8, gekennzeichnet dadurch, daß der nächste Deponieraum parallel in direkter Anlehnung an den vorhergehenden angelegt wird.

10. Verfahren nach Anspruch 1, gekennzeichnet dadurch, daß vor dem Oberflächenverschluß der gefüllten Deponie mit Flugasche- bzw. Flugasche-Zement-Suspension eine kapillarbrechende Schicht eingebracht wird.

## Claims

1. A procedure for complex dumping of harmful substances with water-soluble portions, whereby the harmful substances are rendered inert by adding a flue ash saturated with water, moulded to blocks under the possible addition of cement as alkaline stimulant and stored in a disposal room,
**characterised in that**
the disposal room is made parallel to block manufacture after an examination of the harmful substances and categorising the disposal room in such a way that its walls (1 - 4) are formed by a ground excavation and subsequent filling with a flue ash- or flue ash-cement-suspension comprising broken additives and/or a textile strengthening and its ground (5) being suspended after the internal excavation with a layer (5) provided with textile strengthening, said layer consisting of flue ash or flue ash-cement-suspension, whereby all sides of the disposal room are filled with blocks (6) by means of flue ash or flue ash-cement-suspension and the disposal room being closed under inclusion of textile strengthening.

2. The procedure according to claim 1, characterised in that the ground and the sealing layer (8) of the disposal room are made with an incline in the flowing direction of the ground water and the water stored in the strata (11), respectively.

3. The procedure according to claims 1 and 2, characterised in that a control drilling (10) that is permanently to be supervised is made in the flowing direction of the ground water and the water stored in the strata (11), respectively.

4. The procedure according to claim 1 characterised in that liquid harmful substances are used for the suspension instead of the normal starting water.

5. The procedure according to claim 1 characterised in that a protective coat and/or an oil paper, roofing paper or foil sheathing is used as a surface protection for the blocks (6).

6. The procedure according to claim 1 characterised in that a layer of dewaterable material is used between the individual block layers (6) in the disposal room.

7. The procedure according to claim 6 characterised in that flue ash, cement or textile strengthening is used as a dewaterable material.

8. The procedure according to claim 1 to 7 characterised in that the closed dump is provided with an earth cover (9).

9. The procedure according to claim 1 to 8 characterised in that the next disposal room will be laid out in parallel with direct reference to the preceding one.

10. The procedure according to claim 1 characterised in that capillary-breaking layer has been inserted in front of the surface blocking of the filled dump by means of flue ash or a flue ash-cement suspension.

## Revendications

1. Procédé pour le dépôt de produits nocifs avec des parts solubles dans l'eau, les produits nocifs étant inertisés par une intégration dans les cendres volantes saturées de l'eau, façonnés en blocs avec l'addition éventuelle du ciment comme activateur alcalin et mis dans un compartiment de dépôt, caractérisé en ce
que, parallèlement au façonnage des blocs après une analyse des produits nocifs et leur catégorisation, le compartiment de dépôt est préparé de sorte que ses parois (1 - 4) sont réalisés par un enlèvement de terres et le remplissage suivant par l'intermédiaire d'une suspension des cendres volantes ou bien des cendres volantes et du ciment, qui contient des additifs concassés et/ou une âme textile, et qu'après le creusement intérieur, son sol (5) est élutrié d'une couche (5) composée d'une suspension des cendres volantes ou bien des cendres volantes et du ciment; ensuite, le compartiment de dépôt plein de blocs (6) est rempli partout d'une suspension des cendres volantes ou bien des cendres volantes et du ciment et verrouillé à l'aide d'une âme textile.

2. Procédé selon la revendication 1 caractérisé par le fait que le sol et la couche de verrouillage (8) du compartiment de dépôt sont réalisés avec une pente dans la direction d'écoulement de l'eau phréatique ou bien de l'eau d'une couche du sol (11).

3. Procédé selon les revendications 1 et 2 caractérisé en ce qu'un sondage de contrôle (19) à surveiller continuellement est introduit dans la direction d'écoulement de l'eau phréatique ou bien de l'eau d'une couche du sol (11).

4. Procédé selon la revendication 1 caractérisé en ce qu'au lieu de l'eau de mouillage, on utilise des produits nocifs liquides pour la suspension.

5. Procédé selon la revendication 1 caractérisé en ce que la protection superficielle des blocs (6) consiste en une couche de peinture protectrice et/ou un enrobage de papier huilé, de carton goudronné ou de feuille.

6. Procédé selon la revendication 1 caractérisé en ce qu'une couche de matière à assécher est introduite entre les couches individuelles des blocs (6) dans le compartiment de dépôt.

7. Procédé selon la revendication 6 caractérisé en ce que les cendres volantes, le ciment ou l'âme textile sont utilisés comme matière à assécher

8. Procédé selon la revendication 1 jusqu'à 7 caractérisé en ce que le dépôt verrouillé est couvert d'une couche de terre (9).

9. Procédé selon la revendication 1 jusqu'à 8 caractérisé en ce que le compartiment de dépôt prochain est disposé parallèlement au compartiment précédent, en suivant directement l'exemple de celui-ci.

10. Procédé selon la revendication 1 caractérisé en ce qu'une couche empêchant la conductivité capillaire est introduite avant la verrouillage superficielle du dépôt rempli par l'intermédiare d'une suspension des cendres volantes ou bien des cendres volantes et du ciment.
